# EUROPÄISCHE PATENTSCHRIFT

(11) **EP 2 032 875 B1**
(45) Veröffentlichungstag und Bekanntmachung des Hinweises auf die Patenterteilung: **12.05.2010**
(21) Anmeldenummer: 07786750.5
(22) Anmeldetag: 18.06.2007
(51) Int. Cl.: F16H 3/66, F16H 37/04

(54) **DOPPELKUPPLUNGSGETRIEBE**
DUAL-CLUTCH TRANSMISSION
TRANSMISSION À EMBRAYAGE DOUBLE

(30) Priorität: 23.06.2006 DE 102006028798
(43) Veröffentlichungstag der Anmeldung: 11.03.2009
(73) Patentinhaber: ZF Friedrichshafen AG, 88038 Friedrichshafen (DE)
(72) Erfinder: GUMPOLTSBERGER, Gerhard, 88045 Friedrichshafen (DE)
(86) Internationale Anmeldenummer: PCT/EP2007/056012
(87) Internationale Veröffentlichungsnummer: WO 2007/147800

(56) Entgegenhaltungen:
- EP-A- 1 647 736
- DE-A1- 10 033 476
- DE-A1-102004 014 082

## Beschreibung

Die vorliegende Erfindung betrifft ein Doppelkupplungsgetriebe gemäß dem Oberbegriff des Patentanspruchs 1.

Heutige Automatgetriebe für eine Front-Quer-Anordnung in einem Fahrzeug umfassen entweder einen vorgeschalteten Wandler und ein nachgeschaltetes lastschaltbares Planetengetriebe oder ein Doppelkupplungsgetriebe.

Bei dieser Antriebsstranganordnung ist der Bauraum beschränkt, so dass die Anordnung der notwendigen Elemente zur Darstellung der Übersetzungen möglichst kompakt sein soll. Dies betrifft insbesondere die Baulänge des Getriebes, da der Bauraum für Quereinbau sehr beschränkt ist. Des weiteren ist der Wirkungsgrad des Getriebes ein sehr wichtiges Kriterium, wobei Doppelkupplungsgetriebe auf Grund ihrer Bauform gegenüber konventionellen Planetengetrieben einen Vorteil bezüglich der Verzahnungs- und Schleppverluste haben. Der Grund hierfür ist, dass bei einem Doppelkupplungsgetriebe zwei Zahneingriffe vorgesehen sind, wobei bei einem Planetengetriebe zwei Zahneingriffe und Planetengetriebeverluste den Wirkungsgrad gegenüber einem Doppelkupplungsgetriebe verschlechtern. Des weiteren weist ein Doppelkupplungsgetriebe geringere Schleppverluste als ein Planetengetriebe auf, da bei einem Doppelkupplungsgetriebe eine offene Lastschaltkupplung gegenüber mindestens drei offenen Lastschaltkupplungen eines Planetengetriebes vorgesehen ist.

Planetengetriebe in Front-Quer-Bauweise für PKW's weisen üblicherweise einen Wandler als Anfahrelement auf und umfassend mindestens zwei Planetensätze und mindestens fünf Lastschaltelemente, die üblicherweise als Lamellenkupplungen/-bremsen ausgebildet sind; in der Regel sind bis zu sechs Vorwärtsgänge und ein Rückwärtsgang realisierbar. Hierbei kann das Planetengetriebe entweder vollkommen koaxial zur Antriebswelle angeordnet sein oder als Quasi-Gruppengetriebe (in der Regel 5-Gang-Getriebe) mit einem koaxial zur Antriebswelle angeordneten Hauptgetriebe und einem auf einer Nebenwelle angeordneten Nachschaltsatz ausgebildet sein.

Aus der EP 0 434 525 B1 geht ein Getriebe in Planetenbauweise hervor, welches im Wesentlichen eine Antriebswelle und eine Abtriebswelle, die parallel zueinander angeordnet sind, einen konzentrisch zur Abtriebswelle angeordneten Doppelplanetenradsatz und fünf Schaltelemente in der Form von drei Kupplungen und zwei Bremsen umfasst, deren wahlweise Sperrung jeweils paarweise die verschiedenen Gangübersetzungen zwischen der Antriebswelle und der Abtriebswelle bestimmt. Hierbei weist das Getriebe einen Vorschaltradsatz und zwei Leistungswege auf, so dass durch das selektive paarweise Eingreifen der fünf Schaltelemente sechs Vorwärtsgänge erzielt werden.

Eine Konstruktion umfassend eine Nebenwelle ist beispielsweise aus der JP 2005-23987 bekannt. Hierbei sind die beiden Radsätze des Hauptschaltradsatzes auf zwei parallel liegenden Wellen angeordnet und über zwei Stirn- bzw. zwei Kettentriebe miteinander wirkverbunden. Über eine mit den beiden Wellen mittels Stirngetriebe wirkverbundene Getriebeeingangswelle wird das Eingangsmoment auf die beiden genannten Wellen geführt und über Schaltelemente gemäß der Schaltlogik auf die betreffenden Elemente der Planetenradsätze übertragen.

Des weiteren sind aus dem Stand der Technik Doppelkupplungsgetriebe in Vorgelegebauweise bekannt, bei denen die Doppelkupplung als Anfahr- und Schaltelement dient; hierbei ist das Vorgelegegetriebe formschlüssig schaltbar.

Aus der DE 10 2004 001 278 A1 ist ein Doppelkupplungsgetriebe bekannt, welches zwei Eingangswellen, zwei Kupplungen und mindestens eine erste und eine zweite Triebwelle aufweist, wobei die erste Eingangswelle mit der ersten Kupplung und die zweite Eingangswelle mit der zweiten Kupplung wirksam verbindbar ist, wobei die erste Triebwelle unterhalb und die zweite Triebwelle oberhalb oder umgekehrt der Eingangswellen angeordnet sind, wobei die Eingangswellen und Triebwellen miteinander in Eingriff stehende Zahnräder aufweisen und zumindest zwei Zahnräder eine Gangstufe bilden.

Hierbei ist mindestens ein Zahnrad einer Gangstufe als ein- und/oder auskuppelbares Losrad und das andere Zahnrad als Festrad ausgebildet; des weiteren weist jede Triebwelle ein Antriebszahnrad zur Übertragung von Drehkraft auf den Achsantrieb auf, wobei zur Realisierung des Rückwärtsganges eine weitere Welle vorgesehen ist, welche als dritte Triebwelle ausgebildet ist.

Aus dem Stand der Technik sind auch Doppelkupplungsgetriebe mit einem nachgeschalteten Planetengetriebe bekannt, welche jedoch für einen Standardantrieb und nicht für eine Front-Quer-Anordnung geeignet sind.

Beispielsweise ist in der EP 1 422 441 A2 eine Familie von Mehrgang-Planetengetrieben mit einer Doppelkupplung bekannt. Ein derartiges Getriebe umfasst eine Eingangswelle und eine Ausgangswelle, einen ersten, einen zweiten, einen dritten und einen vierten Planetensatz, wobei die Planetensätze jeweils drei Elemente aufweisen, wobei eine erste Welle ein erstes Element des ersten Planetensatzes mit einem ersten Element des zweiten Planetensatzes ständig verbindet, wobei eine zweite Welle ein zweites Element des ersten Planetensatzes mit einem zweiten Element des zweiten Planetensatzes ständig verbindet, wobei eine dritte Welle ein Element des ersten oder zweiten Planetensatzes mit einem ersten Element des dritten Planetensatzes und der Ausgangswelle ständig verbindet, und wobei eine vierte Welle ein zweites Element des dritten Planetensatzes mit dem ersten Element des vierten Planetensatzes ständig verbindet. Des weiteren ist eine erste Kupplung mit der Eingangswelle verbunden und eine zweite Kupplung verbindet die Eingangswelle mit einem dritten Element des dritten Planetensatzes.

Die in der EP 1 422 441 A2 beschriebenen Getriebe umfassen zudem einen ersten und einen zweiten Drehmomentübertragungsmechanismus, wobei die Drehmomentübertragungsmechanismen wahlweise Elemente des ersten und des zweiten Planetensatzes mit der ersten Kupplung verbinden. Ferner ist ein dritter und ein vierter Drehmomentübertragungsmechanismus vorgesehen, wobei diese Drehmomentübertragungsmechanismen wahlweise Elemente des dritten Planetensatzes mit Elementen des vierten Planetensatzes verbinden; ein fünfter und ein sechster Drehmomentübertragungsmechanismus verbinden zudem wahlweise Elemente des ersten oder zweiten Planetensatzes mit einem gehäusefesten Element, wobei ein siebter Drehmomentübertragungsmechanismus ein Element des vierten Planetensatzes mit dem gehäusefesten Element lösbar verbindet. Des weiteren ist ein achter Drehmomentübertragungsmechanismus vorgesehen, welcher wahlweise ein Element des ersten oder des zweiten Planetensatzes mit der ersten Kupplung oder ein Element des vierten Planetensatzes mit dem gehäusefesten Element lösbar verbindet.

Weitere Doppelkupplungsgetriebe mit nachgeschaltetem Planetengetriebe für eine Standard-Anordnung sind z.B. aus der EP 1 422 448 A2, der EP 1 424 510 A2. der EP 1 424 511 A2, der EP 1 566 570 A1 und der EP 1 566574 A1 bekannt.

Aus der gattungsbildenden DE 10 2004 014 082 A1 der Anmelderin ist ein Doppelkupplungsgetriebe in Planetenbauweise mit mehreren Planetensätzen, wenigstens zwei reibschlüssigen Schaltelementen zum Zuschalten verschiedener Leistungspfade in einen Kraftfluss und mehreren formschlüssigen Schaltelementen zum Einstellen verschiedener Übersetzungsstufen in den Leistungspfaden bekannt. Hierbei sind die reibschlüssigen Schaltelemente und die formschlüssigen Schaltelemente derart zwischen den Wellen der Planetensätze, einem Gehäuse sowie einer Getriebeeingangswelle und einer Getriebeausgangswelle angeordnet, dass Gangstufenwechsel zumindest in einem unteren Gangstufenbereich über die reibschlüssigen Schaltelemente zugkraftunterbrechungsfrei durchführbar sind, wobei zumindest eines der reibschlüssigen Schaltelemente als Kupplung ausgeführt ist ,und wobei der zweite Planetensatz, ein dritter Planetensatz und ein vierter Planetensatz eine 3-Steg-5-Wellen Getriebeeinrichtung ausbilden, die mit separaten Planetenrädern ausgeführt ist.

Ein weiteres Doppelkupplungsgetriebe für eine Standardanordnung, umfassend ein Planetengetriebe ist im Rahmen der WO 2005/050060 A1 beschrieben. Es umfasst eine Antriebswelle und eine Abtriebswelle, die miteinander über zumindest zwei Leistungspfade verbunden sind, wobei ein Leistungspfad zumindest zwei Übersetzungen aufweist, wobei die Übersetzungen unterschiedlich sind. Des weiteren ist die Antriebswelle ständig mit den Eingangswellen der Leistungspfade verbunden.

Der vorliegenden Erfindung liegt die Aufgabe zugrunde, ein lastschaltbares Doppelkupplungsgetriebe anzugeben, welches möglichst kompakt aufgebaut ist und für einen Front-Quer-Einbau geeignet ist. Des weiteren soll das erfindungsgemäße Getriebe kostengünstig herstellbar und möglichst verlustarm sein.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Doppelkupplungsgetriebe für eine Front-Quer-Anordnung vorgeschlagen, umfassend eine Doppelkupplung und zwei Teilgetriebe, wobei die beiden Kupplungen der Doppelkupplung jeweils auf eine koaxiale Getriebeeingangswelle wirken, die auf ein Teilgetriebe wirkt, bei dem die Teilgetriebe als formschlüssig zu schaltende Planetengetriebe ausgebildet sind, wobei der Abtrieb an der gleichen Seite des Getriebes wie der Antrieb und achsparallel zum Antrieb mit gleicher Drehrichtung erfolgt.

Hierbei wird das Moment über zumindest eine parallel zu den Getriebeeingangswellen angeordnete Zwischenwelle auf die Abtriebswelle übertragen. Die Gänge der Planetengetriebe werden nicht mittels lastschaltbaren Lamellenschaltelementen, sondern mit formschlüssigen Schaltelementen, beispielsweise mit Synchronisierungen oder Klauenkupplungen geschaltet.

Gemäß der Erfindung ist jedem Teilgetriebe zumindest eine Stirnradstufe bzw. Stirnradübersetzung zugeordnet, wodurch die Übersetzungsreihen den an Mehrganggetriebe gestellten Anforderungen entsprechen.

Der Leistungsfluss erfolgt vom Motor über ein optionales Element zur Drehschwingungsreduktion, über einen optionalen hydraulischen Drehmomentwandler oder eine hydraulische Kupplung in die Doppelkupplung. Diese ist vorzugsweise als ein Doppelkupplungsmodul ausgeführt. Sie kann jedoch auch als "aufgelöste" Doppelkupplung aus zwei an unterschiedlichen Stellen im Getriebe angeordneten Kupplungen bestehen.

Jede Kupplung der Doppelkupplung wirkt auf eine koaxiale Getriebeeingangswelle, die auf ein Planetengetriebe wirkt, wobei optional eine Stirnradstufe in Kraftflussrichtung vor dem jeweiligen Planetengetriebe angeordnet sein kann. Das Moment wird über die Stirnradstufen auf eine koaxial zu den anderen Wellen angeordnete Zwischenwelle übertragen. Ist eine Stirnradstufe in Kraftflussrichtung vor dem ihr zugeordneten Planetengetriebe angeordnet, dann ist das Planetengetriebe auf der Zwischenwelle parallel zur Antriebsachse angeordnet. Sind die Stirnradstufen in Kraftflussrichtung nach den Planetengetrieben angeordnet, dann sind die Planetengetriebe auf der Abtriebsachse angeordnet.

Sind die Stirnradstufen in kraftflussrichtung vor den beiden Planetengetrieben angeordnete, dann können die Planetengetriebe entweder auf der gleichen zur Antriebsachse parallelen Zwischenwelle angeordnet sein oder auf zwei unterschiedlichen (aber parallelen) Zwischenwellen angeordnet sein.

Im Falle einer einzigen Zwischenachse/-welle ist eine zusätzliche Stirnradstufe vorgesehen, welche die Zwischenwelle mit der Abtriebswelle verbindet. Für den Fall, dass zwei unterschiedliche Zwischenachsen vorgesehen sind, sind zwei zusätzliche Stirnradstufen erforderlich, um die Verbindung der weiteren Zwischenachsen zur Abtriebswelle zu gewährleisten (d.h. pro Zwischenachse ist eine zusätzliche Stirnradstufe vorgesehen).

Im Vergleich zum konventionellen Doppelkupplungsgetriebe übernehmen bei dem erfindungsgemäßen Getriebe zwei Planetengetriebe die Aufgabe der beiden Teilgetriebe. Ein Planetengetriebe repräsentiert hierbei das Teilgetriebe mit den ungeraden Gängen, wobei das weitere Planetengetriebe hierbei das zweite Teilgetriebe mit den geraden Gängen repräsentiert:

Die Funktionsweise zum Schalten der unterschiedlichen Gänge unterscheidet sich nicht von der Funktionsweise von konventionellen Doppelkupplungsgetrieben. So werden die einzelnen Gänge in den Teilgetrieben vorbereitet und durch den Kupplungswechsel in der Doppelkupplung geschaltet. Die Planetengetriebe weisen hierbei als Teilgetriebe jeweils eine Hälfte der benötigten Vorwärtsgänge auf, wobei ein Planetengetriebe entweder die geraden oder die ungeraden Gänge darstellt. Des weiteren können ein oder mehrere Rückwärtsgänge vorhanden sein.

Die Teilgetriebegänge werden durch die Betätigung von einem oder auch von mehreren Schaltelementen gleichzeitig geschaltet. Diese verbinden entweder eine Planetengetriebewelle mit einer anderen vorhandenen Welle oder eine Planetengetriebewelle mit dem Gehäuse.

Die Erfindung erfüllt die Anforderungen an eine Front-Quer-Anordnung, d.h. es wird ein achsparalleler Abtrieb mit gleicher Drehrichtung und möglichst kurzer Bauform realisiert. Zudem entsprechen die Übersetzungsreihen den an Mehrganggetriebe gestellten Anforderungen. Dies wird unter anderem erreicht durch die jeweils den Teilgetrieben zugeordneten Stirnradübersetzungen.

Das Abtriebsrad bzw. die Abtriebsräder sind mit einem Ausgleichsdifferenzial verbunden, das entweder für den Drehzahlausgleich zwischen rechtem und linken angetriebenen Rad (reiner Front-Antrieb) oder zwischen Vorder- und Hinterachse (Allradantrieb) sorgt. Optionalerweise kann der Drehzahlausgleich auch durch Kupplungen erfolgen.

Die verwendeten Planetengetriebe bestehen aus mindestens einem Planetensatz in konventioneller Bauweise, wobei der Planetensatz als ebener Minus- oder Plus-Planetensatz oder als Stufenplanetensatz ausgebildet sein kann. Sie werden entweder mit Synchronisierungen oder mit Klauenkupplungen geschaltet.

Die Erfindung wird im Folgenden anhand der beigefügten Figuren beispielhaft näher erläutert.
Es zeigen:
- Figur 1: eine schematische Darstellung des prinzipiellen Aufbaus eines erfindungsgemäßen Getriebes;
- Figur 2: eine schematische Darstellung des prinzipiellen Aufbaus eines erfindungsgemäßen Getriebes sowie der Anordnung der Stirnradstufen in Kraftflussrichtung nach den Planetengetrieben;
- Figur 3: eine schematische Darstellung des prinzipiellen Aufbaus eines erfindungsgemäßen Getriebes sowie einer weiteren Möglichkeit der Anordnung der Stirnradstufen;
- Figur 4: eine schematische Darstellung des prinzipiellen Aufbaus eines erfindungsgemäßen Getriebes sowie einer weiteren Möglichkeit der Anordnung der Stirnradstufen;
- Figur 5: eine schematische Darstellung des prinzipiellen Aufbaus eines erfindungsgemäßen Getriebes sowie der Anordnung der Stirnradstufen in Kraftflussrichtung vor den Planetengetrieben;
- Figur 6: eine schematische Darstellung des prinzipiellen Aufbaus eines erfindungsgemäßen Getriebes sowie der Anordnung der Stirnradstufen in Kraftflussrichtung vor und nach den Planetengetrieben;
- Figur 7:: eine schematische Darstellung der Anordnung der Wellen bei einer Drei-Wellen-Anordnung;
- Figur 8: eine schematische Darstellung der Anordnung der Wellen bei einer Vier-Wellen-Anordnung;
- Figur 9: eine schematische Ansicht einer ersten Ausführungsform eines erfindungsgemäßen Getriebes;
- Figur 10: eine schematische Ansicht einer zweiten Ausführungsform eines erfindungsgemäßen Getriebes;
- Figur 11: eine schematische Ansicht einer dritten Ausführungsform eines erfindungsgemäßen Getriebes;
- Figur 12: eine schematische Ansicht einer vierten Ausführungsform eines erfindungsgemäßen Getriebes;
- Figur 13: eine schematische Ansicht einer fünften Ausführungsform eines erfindungsgemäßen Getriebes;
- Figur 14: eine schematische Ansicht einer sechsten Ausführungsform eines erfindungsgemäßen Getriebes;
- Figur 15: eine schematische Ansicht einer siebten Ausführungsform eines erfindungsgemäßen Getriebes;
- Figur 16: eine schematische Ansicht einer achten Ausführungsform eines erfindungsgemäßen Getriebes;
- Figur 17: eine schematische Ansicht einer neunten Ausführungsform eines erfindungsgemäßen Getriebes;
- Figur 18: eine schematische Ansicht einer zehnten Ausführungsform eines erfindungsgemäßen Getriebes;
- Figur 19: eine schematische Ansicht einer elften Ausführungsform eines erfindungsgemäßen Getriebes;
- Figur 20: eine schematische Ansicht einer zwölften Ausführungsform eines erfindungsgemäßen Getriebes;
- Figur 21: eine schematische Ansicht einer dreizehnten Ausführungsform eines erfindungsgemäßen Getriebes;
- Figur 22: eine schematische Ansicht einer vierzehnten Ausführungsform eines erfindungsgemäßen Getriebes;
- Figur 23: eine schematische Ansicht einer fünfzehnten Ausführungsform eines erfindungsgemäßen Getriebes;
- Figur 24: eine schematische Ansicht einer sechzehnten Ausführungsform eines erfindungsgemäßen Getriebes;
- Figur 25: eine schematische Ansicht einer weiteren Ausführungsform eines erfindungsgemäßen Getriebes;
- Figur 26: ein beispielhaftes Schaltschema enthaltend die Übersetzungsreihe für das in Figur 25 gezeigte Getriebe;
- Figur 27: eine schematische Ansicht einer weiteren Ausführungsform eines erfindungsgemäßen Getriebes; und
- Figur 28: ein beispielhaftes Schaltschema enthaltend, die Übersetzungsreihe für das in Figur 27 gezeigte Getriebe.

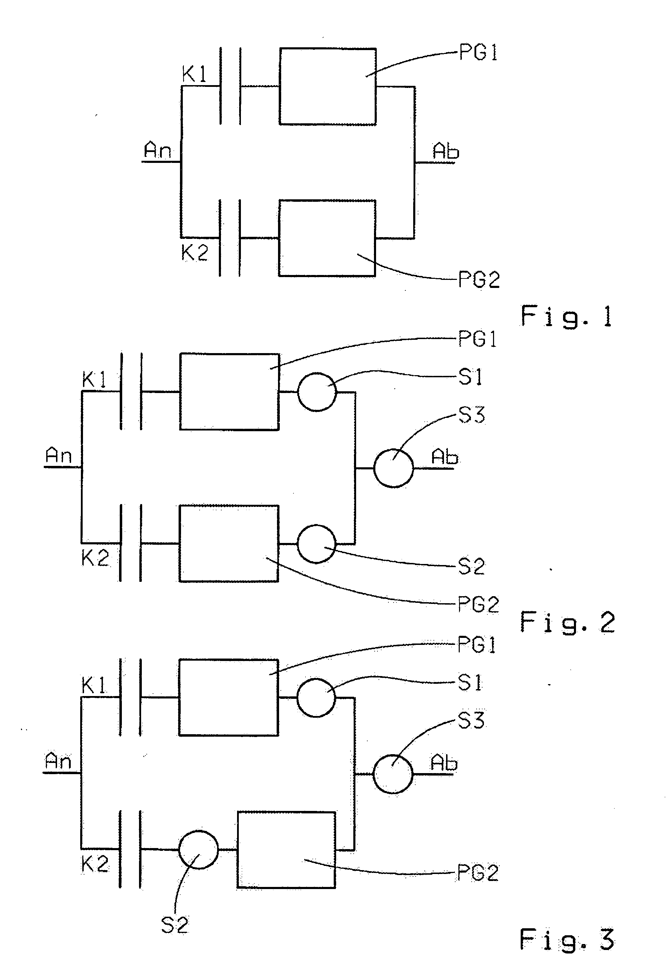

In Figur 1 ist der prinzipielle Aufbau eines Getriebes gemäß der Erfindung dargestellt. Demnach umfasst das Getriebe eine Antriebswelle An, eine Abtriebswelle Ab, eine Doppelkupplung umfassend die Kupplungen K1 und K2 und mindestens zwei formschlüssig zu schaltende Teilgetriebe, die als Planetengetriebe PG1 bzw. PG2 ausgebildet sind.

Erfindungsgemäß ist jedem Teilgetriebe zumindest eine Stirnradstufe bzw. Stirnradübersetzung zugeordnet, wodurch die Übersetzungsreihen den an Mehrganggetriebe gestellten Anforderungen entsprechen. Unterschiedliche Möglichkeiten der prinzipiellen Anordnung der Stirnradstufen sind Gegenstand der Figuren 2 bis 6.

Bei der Anordnung gemäß Figur 2 sind zwei Stirnradstufen S1 und S2 vorgesehen, die den Planetengetrieben PG1 bzw. PG2 zugeordnet sind, wobei die Stirnradstufen in Kraftflussrichtung nach den Planetengetrieben angeordnet sind. Des weiteren ist eine weitere Stirnradstufe S3 vorgesehen, welche eine Zwischenwelle mit der Abtriebswelle Ab verbindet.

Die in Figur 3 gezeigte Anordnung unterscheidet sich von der Anordnung nach Figur 2 darin, dass die dem Planetengetriebe PG2 zugeordnete Stirnradstufe S2 in Kraftflussrichtung vor dem Planetengetriebe PG2 angeordnet ist. In diesem Fall ist das Planetengetriebe PG2 auf einer zweiten Achse parallel zur Antriebsachse angeordnet, welche mit der Abtriebswelle Ab über die Stirnradstufe S3 verbunden ist.

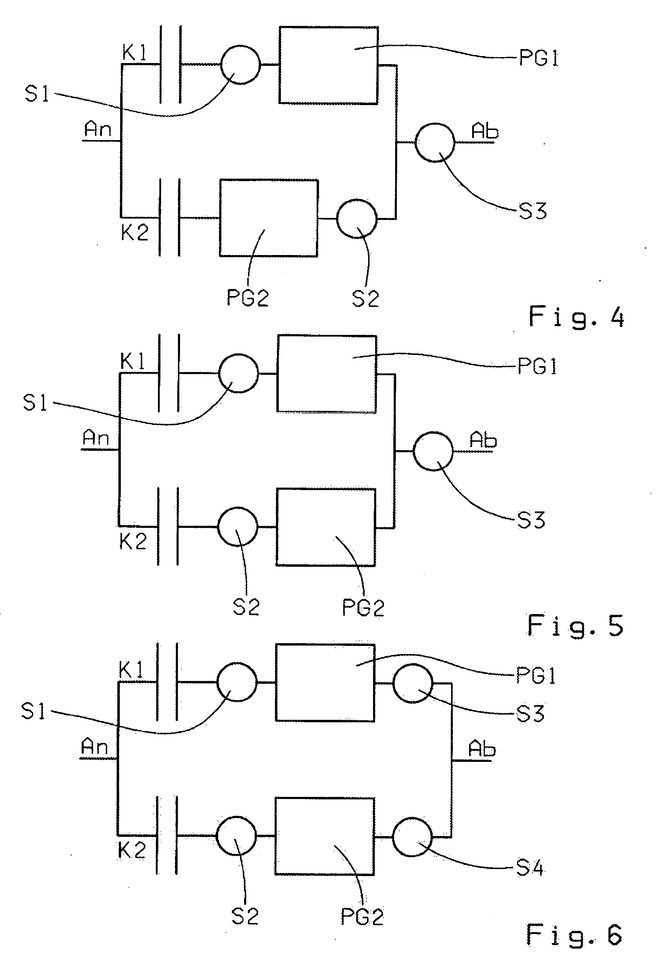

Bei der Anordnung nach Figur 4 besteht der Unterschied zur Anordnung gemäß Figur 2 darin, dass die dem Planetengetriebe PG1 zugeordnete Stirnradstufe S1 in Kraftflussrichtung vor dem Planetengetriebe PG1 angeordnet ist. Hierbei ist das Planetengetriebe PG1 auf einer zweiten Achse parallel zur Antriebsachse angeordnet, welche mit der Abtriebswelle Ab über die Stirnradstufe S3 verbunden ist.

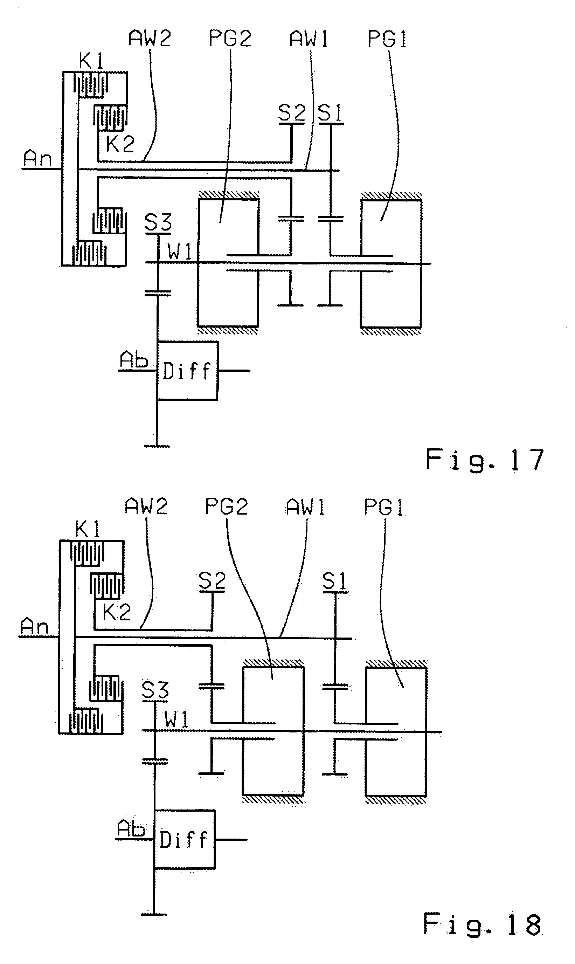

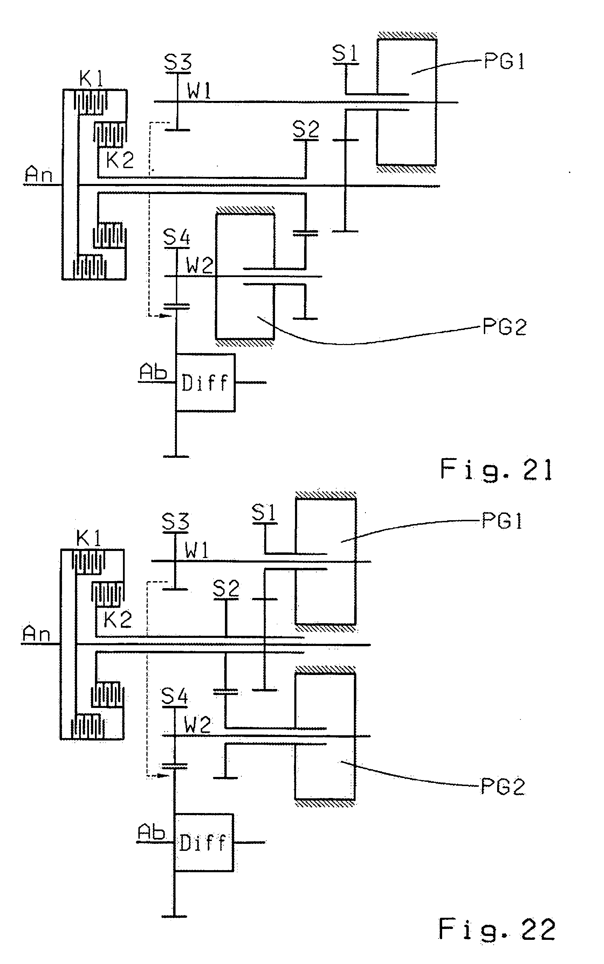

Gemäß Figur 5 können die den Planetengetrieben zugeordneten Stirnradstufen S1 und S2 in Kraftflussrichtung vor den Planetengetrieben angeordnet sein. In diesem Fall können die Planetengetriebe entweder auf der gleichen zur Antriebsachse parallel angeordneten Zwischenachse angeordnet sein (vgl. Figuren 17,18, 19, 20) oder auf zwei unterschiedlichen, parallelen Zwischenachsen angeordnet sein, wie anhand der Figuren 21, 22, 23 und 24 erläutert. Für den Fall, dass zwei unterschiedliche Zwischenachsen vorgesehen sind, ist, wie in Figur 6 gezeigt, eine weitere Stirnradstufe S4 erforderlich, um die Verbindung der weiteren Zwischenachse zur Abtriebswelle zu gewährleisten.

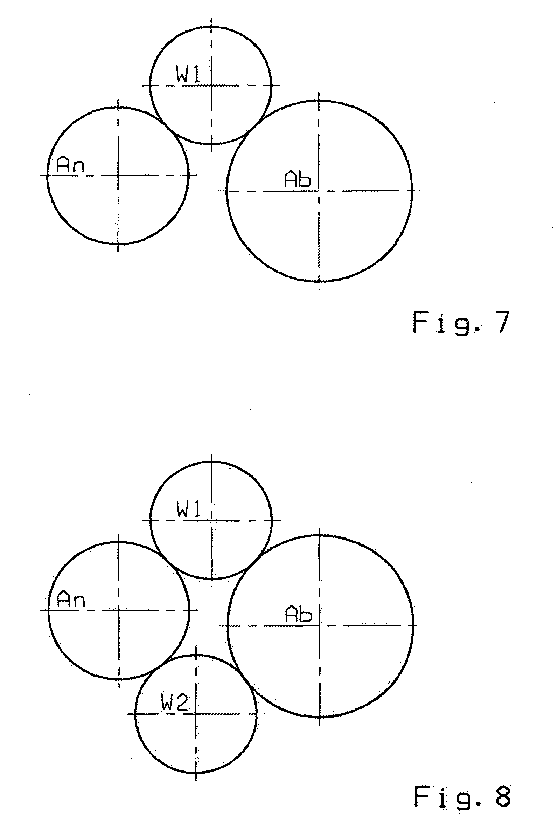

Das erfindungsgemäße Getriebe kann demnach, neben den mit den beiden Kupplungen K1 und K2 drehfest verbundenen Wellen, drei oder vier Wellen aufweisen, nämlich die Antriebswelle An, die Abtriebswelle Ab, eine Zwischenwelle W1 und in Abhängigkeit von der Anordnung der Planetengetriebe eine weitere Zwischenwelle W2. Dies ist Gegenstand der Figuren 7 und 8, wobei Figur 7 eine Drei-Wellen-Anordnung und Figur 8 eine Vier-Wellen-Anordnung darstellt.

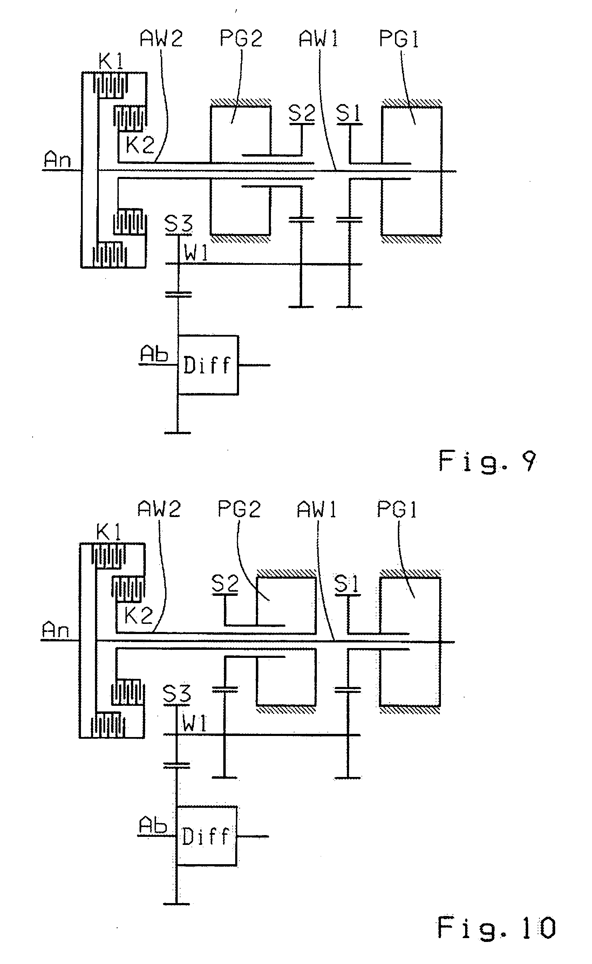

In Figur 9 ist eine erste Ausführungsform eines erfindungsgemäßen Getriebes schematisch dargestellt. Es umfasst eine Doppelkupplung mit den Kupplungen K1 und K2 und zwei Teilgetriebe, die als formschlüssig zu schaltende Planetengetriebe PG1, PG2 ausgebildet sind, wobei jedem Planetengetriebe zumindest eine Stirnradstufe bzw. Stirnradübersetzung S1 bzw. S2 zugeordnet ist.

Die beiden Kupplungen K1, K2 der Doppelkupplung wirken jeweils auf zwei koaxiale Getriebeeingangswellen AW1 bzw. AW2, welche jeweils auf ein Planetengetriebe PG1 bzw. PG2 wirken; die Welle AW1 ist als Vollwelle ausgebildet und ist koaxial zur als Hohlwelle ausgebildeten Welle AW2 angeordnet. Bei dem in Figur 9 gezeigten Ausführungsbeispiel sind die den Planetengetrieben PG1, PG2 zugeordneten Stirnradstufen S1 bzw. S2 in Kraftflussrichtung nach den Planetengetrieben angeordnet (d.h. sie sind mit dem Abtrieb des jeweiligen Planetengetriebes verbunden), wobei die Stirnradstufe S1 gemäß der Figur axial bzw. räumlich betrachtet links vom Planetengetriebe PG1 und die Stirnradstufe S2 axial bzw. räumlich betrachtet rechts vom Planetengetriebe PG2 angeordnet ist. Durch die Stirnradstufen S1 und S2 wird, wie aus der Figur ersichtlich, das Drehmoment auf eine parallel zur Antriebswelle An angeordnete Zwischenwelle W1 übertragen, welche über eine weitere Stirnradstufe S3 mit der Abtriebswelle Ab wirkverbunden ist. Die Abtriebswelle Ab bzw. das Abtriebsrad ist vorzugsweise mit einem Ausgleichsdifferenzial Diff verbunden, das entweder für den Drehzahlausgleich zwischen rechtem und linkem angetriebenen Rad (reiner Front-Antrieb) oder zwischen Vorder- und Hinterachse (Allradantrieb) sorgt. Optionalerweise kann der Drehzahlausgleich auch durch Kupplungen bzw. durch sogenannte Hang-On-Systeme erfolgen.

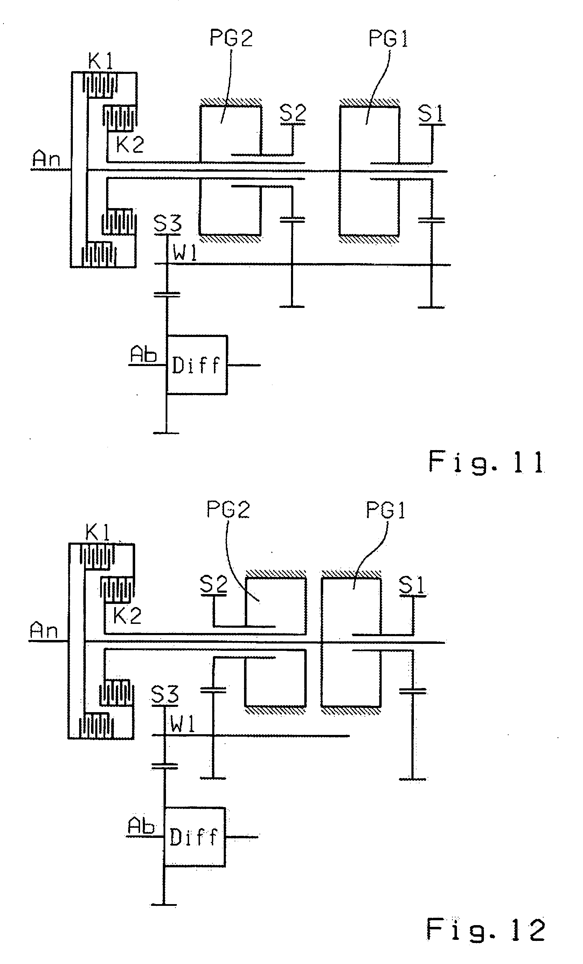

Das in Figur 10 dargestellte Ausführungsbeispiel unterscheidet sich vom Ausführungsbeispiel nach Figur 9 darin, dass die dem Planetengetriebe PG2 zugeordnete Stirnradstufe S2 axial bzw. räumlich betrachtet links vom Planetengetriebe PG2 angeordnet ist. Gemäß der Erfindung können die Stirnradstufen in Kraftflussrichtung betrachtet nach den Planetengetrieben angeordnet sein und axial bzw. räumlich betrachtet rechts von dem jeweiligen Planetengetriebe PG1 bzw. PG2 angeordnet sein. Diese Anordnung ist Gegenstand der Figur 11; bei dem in Figur 12 gezeigten Beispiel ist die dem Planetengetriebe PG1 zugeordnete Stirnradstufe S1 axial bzw. räumlich betrachtet rechts vom Planetengetriebe PG1 angeordnet, wobei die dem Planetengetriebe PG2 zugeordnete Stirnradstufe S2 axial bzw. räumlich betrachtet links vom Planetengetriebe PG2 angeordnet ist.

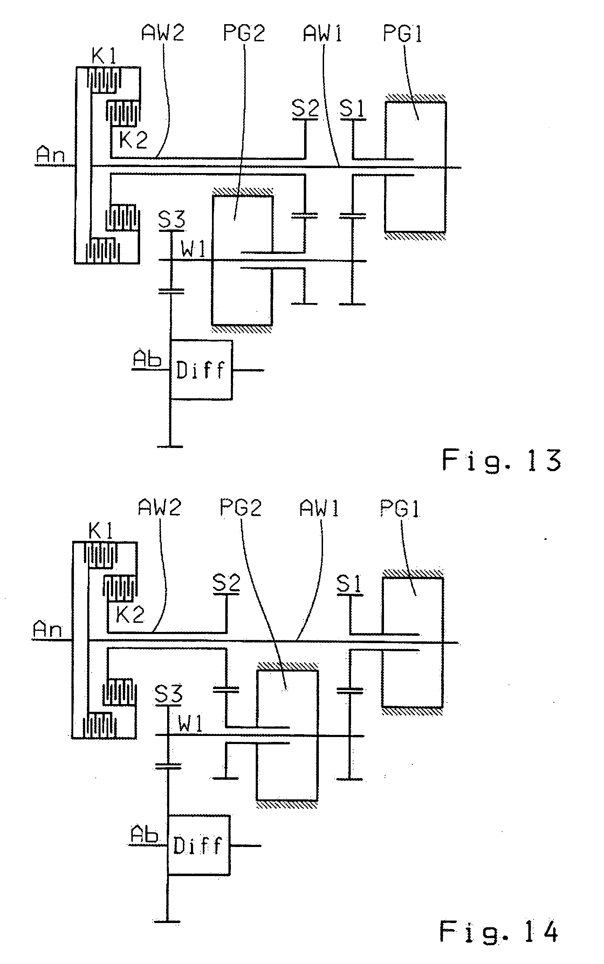

Im Rahmen weiterer Ausführungsformen der Erfindung kann die einem Planetengetriebe zugeordnete Stirnradstufe in Kraftflussrichtung vor dem Planetengetriebe angeordnet sein (d.h, das Planetengetriebe ist abtriebsseitig mit der Stirnradstufe verbunden). In diesem Fall ist dieses Planetengetriebe auf der Zwischenwelle W1 angeordnet. In den Figuren 13, 14, 15 und 16 werden Ausführungsformen veranschaulicht, bei denen das Getriebe PG2 auf der Zwischenwelle S1 angeordnet ist; sie unterscheiden sich in der räumlichen Anordnung der Stirnradstufen S1, S2 relativ zu den Planetengetrieben PG1, PG2. Selbstverständlich kann anstelle des Planetengetriebes PG2 das Planetengetriebe PG1 auf der Zwischenwelle angeordnet sein und das Getriebe PG2 anstelle des Getriebes PG1 koaxial zur Antriebswelle angeordnet sein.

Bei dem in Figur 13 gezeigten Ausführungsbeispielen ist die dem Planetengetriebe PG2 zugeordnete Stirnradstufe S2 axial bzw. räumlich betrachtet rechts vom Planetengetriebe PG2 angeordnet (d.h. nach dem Planetengetriebe), wobei die dem Planetengetriebe PG1 zugeordnete Stirnradstufe S1 in Kraftflussrichtung nach dem Planetengetriebe PG1 und axial betrachtet links vom Getriebe PG1 angeordnet ist.

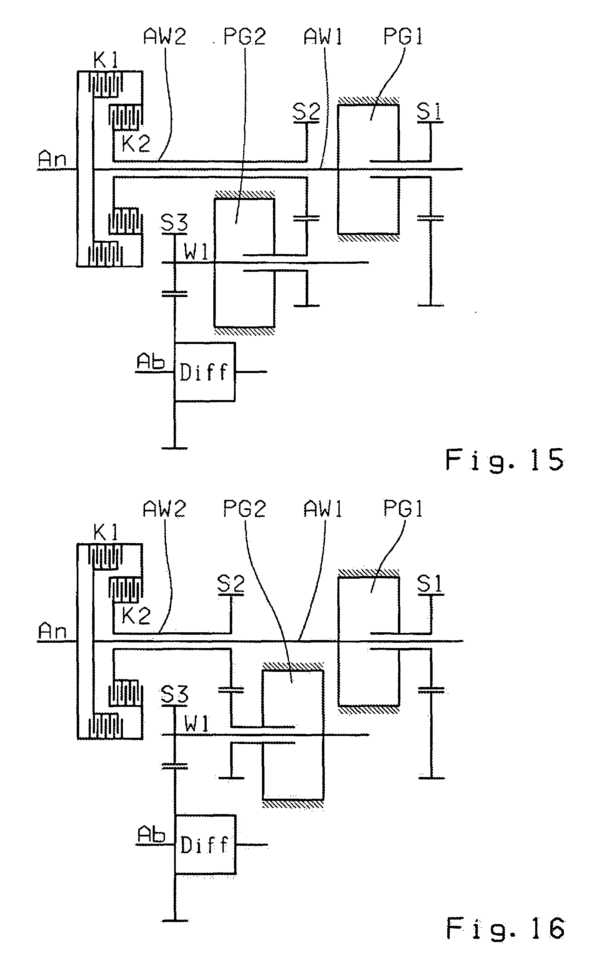

Die in Figur 14 gezeigte Ausführungsform unterscheidet sich von der Ausführungsform nach Figur 13 darin, dass die dem Planetengetriebe PG2 zugeordnete Stirnradstufe S2 axial bzw. räumlich betrachtet links vom Planetengetriebe PG2 angeordnet ist, wobei die in Figur 15 gezeigte Ausführungsform sich von der Ausführungsform nach Figur 13 darin unterscheidet, dass die dem Planetengetriebe PG1 zugeordnete Stirnradstufe S1 axial bzw. räumlich betrachtet rechts vom Getriebe PG1 angeordnet ist.

Des weiteren ist in Figur 16 ein Getriebe gezeigt, bei dem die dem Planetengetriebe PG2 zugeordnete Stirnradstufe S2 axial bzw. räumlich betrachtet links vom Planetengetriebe PG2 angeordnet ist, wobei die dem Planetengetriebe PG1 zugeordnete Stirnradstufen S1 axial bzw. räumlich betrachtet rechts vom Planetengetriebe PG1 angeordnet ist.

In den Figuren 17, 18, 19, und 20 sind Ausführungsbeispiele eines erfindungsgemäßen Getriebes gezeigt, bei denen die beiden Planetengetrieben PG1, PG2 zugeordneten Stirnradstufen S1, S2 in Kraftflussrichtung vor den Planetengetrieben PG1 bzw. PG2 angeordnet sind (d.h. die Planetengetriebe sind antriebsseitig mit der entsprechenden Stirnradstufe verbunden). Hierbei sind die Planetengetriebe PG1, PG2 auf der gleichen zur Antriebsachse parallelen Zwischenachse angeordnet. Die gezeigten Ausführungsbeispiele unterscheiden sich in der räumlichen Anordnung der Stirnradstufen S1, S2 relativ zu den Planetengetrieben PG1, PG2.

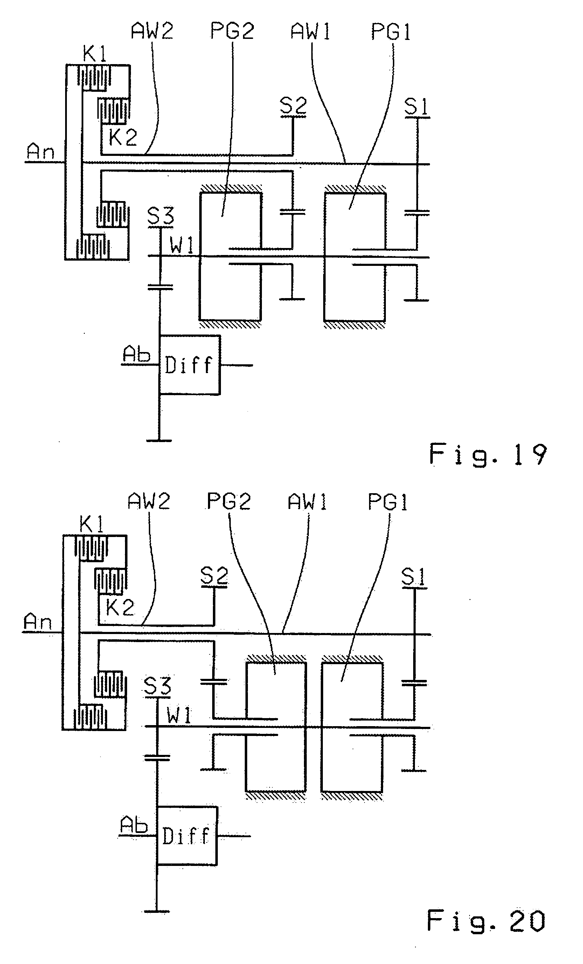

Bei dem in Figur 17 gezeigten Beispiel ist die dem Planetengetriebe PG2 zugeordnete Stirnradstufe S2 axial bzw. räumlich betrachtet rechts vom Planetengetriebe PG2 angeordnet, wobei die dem Planetengetriebe PG1 zugeordnete Stirnradstufe S1 axial bzw. räumlich betrachtet links vom Planetengetriebe PG1 angeordnet ist. Das in Figur 18 gezeigte Ausführungsbeispiel unterscheidet sich vom in Figur 17 gezeigten Beispiel darin, dass die dem Planetengetriebe PG2 zugeordnete Stirnradstufe S2 axial bzw. räumlich betrachtet links vom Planetengetriebe PG2 angeordnet ist. Des weiteren ist in Figur 19 ein Getriebe gezeigt, dessen Aufbau sich vom in Figur 17 gezeigten Getriebe darin unterscheidet, dass die dem Planetengetriebe PG1 zugeordnete Stirnradstufe S1 axial bzw. räumlich betrachtet rechts vom Planetengetriebe PG1 angeordnet ist. Alternativ zu den in den Figuren 17, 18 und 19 gezeigten Anordnungen kann die dem Planetengetriebe PG2 zugeordnete Stirnradstufe S2 axial bzw. räumlich betrachtet links vom Planetengetriebe PG2 und die dem Planetengetriebe PG1 zugeordnete Stirnradstufe S1 axial bzw. räumlich betrachtet rechts vom Planetengetriebe PG1 angeordnet sein. Eine derartige Anordnung ist Gegenstand der Figur 20.

In den Figuren 21, 22, 23 und 24 sind Ausführungsbeispiele eines erfindungsgemäßen Getriebes gezeigt, bei denen die beiden Planetengetrieben PG1, PG2 zugeordneten Stirnradstufen S1, S2 in Kraftflussrichtung vor den Planetengetrieben PG1 bzw. PG2 angeordnet sind (d.h. die Planetengetriebe sind antriebsseitig mit der entsprechenden Stirnradstufe verbunden). Hierbei sind die Planetengetriebe PG1, PG2 jeweils auf einer unterschiedlichen zur Antriebsachse parallelen Zwischenachse W1 bzw. W2 angeordnet. Die gezeigten Ausführungsbeispiele unterscheiden sich in der räumlichen Anordnung der Stirnradstufen S1, S2 relativ zu den Planetengetrieben PG1, PG2.

Bei den in den Figuren 21, 22, 23, und 24 gezeigten Anordnungen ist in Kraftflussrichtung nach den Planetengetrieben PG1, PG2 jeweils eine weitere Stirnradstufe S3 bzw. S4 angeordnet, welche die Wirkverbindung zur Abtriebswelle Ab herstellt. Diese Stirnradstufen S3, S4 können jeweils aus einem Antriebsritzel und einem Abtriebsrad bestehen. In vorteilhafter Weise wird jedoch für beide Stirnradstufen nur ein einziges Abtriebsrad verwendet, auf das beide Ritzel wirken, wie in den Figuren 21 bis 24 gezeigt, wobei die Stirnradstufen trotzdem als zwei getrennte Übersetzungen verwendbar sind.

Gemäß Figur 21 ist die dem Planetengetriebe PG2 zugeordnete Stirnradstufe S2 axial bzw. räumlich betrachtet rechts vom Planetengetriebe PG2 angeordnet, wobei die dem Planetengetriebe PG1 zugeordnete Stirnradstufe S1 axial bzw. räumlich betrachtet links vom Planetengetriebe PG1 angeordnet ist. Das in Figur 22 gezeigte Ausführungsbeispiel unterscheidet sich vom in Figur 17 gezeigten Beispiel darin, dass die dem Planetengetriebe PG2 zugeordnete Stirnradstufe S2 axial bzw. räumlich betrachtet links vom Planetengetriebe PG2 angeordnet ist.

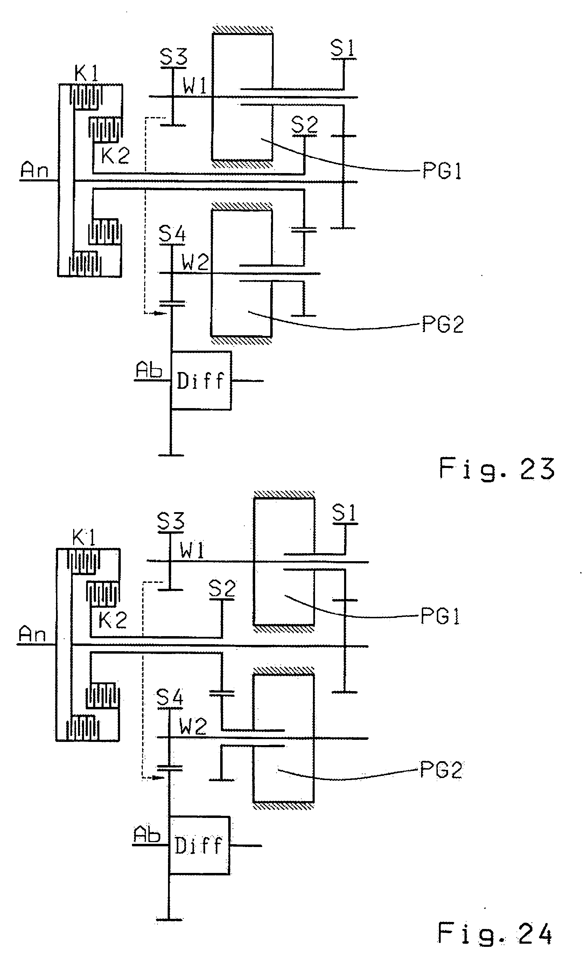

Des weiteren ist in Figur 23 ein Getriebe gezeigt, dessen Aufbau vom in Figur 21 gezeigten Getriebe darin unterscheidet, dass die dem Planetengetriebe PG1 zugeordnete Stirnradstufe S1 axial bzw. räumlich betrachtet rechts vom Planetengetriebe PG1 angeordnet ist. Des weiteren kann gemäß Figur 24, alternativ zu den in den Figuren 17, 18 und 19 gezeigten Anordnungen, die dem Planetengetriebe PG2 zugeordnete Stirnradstufe S2 axial bzw. räumlich betrachtet links vom Planetengetriebe PG2 und die dem Planetengetriebe PG1 zugeordnete Stirnradstufe S1 axial bzw. räumlich betrachtet rechts vom Planetengetriebe PG1 angeordnet sein.

Um eine von 1 unterschiedliche Übersetzung eines Planetengetriebes zu erreichen, wird immer eine Abstützung an einem feststehenden Gehäuse benötigt. Dies bedeutet, dass eine Verbindung zwischen einer freien Welle des Planetengetriebes und des Gehäuses benötigt wird. Diese Verbindung kann entweder zeitlich begrenzt hergestellt werden, wobei in diesem Fall die lösbare Verbindung zum Gehäuse mittels einer Synchronisierung, einer Klauenkupplung oder einer Lamellenbremse herstellbar ist, oder die Verbindung kann dauerhaft sein, d.h. die Abstützung kommt erst zum Tragen, wenn mittels einer Synchronisierung, Klauen- oder Lamellenkupplung eine zweite Welle mit einer dritten Welle verbunden wird.

Eine Übersetzung gleich 1 ist bei einem Planetensatz bzw. Planetengetriebe dadurch realisierbar, indem das Getriebe überbrückt wird, d.h. indem Anund Abtrieb direkt miteinander verbunden werden, oder wenn das Getriebe verblockt wird, d.h. wenn zwei Wellen eines Planetensatzes miteinander verbunden werden.

Zur Realisierung weiterer Gänge, insbesondere eines Rückwärtsgangs, können diese durch weitere Stirnradstufen dargestellt werden, die nach dem Stand der Technik mittels Synchronisierungen mit einer Welle verbunden werden:

In der folgenden Tabelle ist die Erzeugung einer sinnvollen Übersetzung durch Aufteilung der Einzelübersetzungen dargestellt.

| | i | phi | i_p1 | i_p2 | | i_p1' | i_p2' | | i_p1" | i_p2" |
|---|---|---|---|---|---|---|---|---|---|---|
| 1.Gang | 6,00 | 1,71 | 6,00 | | | 5,02 | | | 2,68 | |
| 2.Gang | 3,51 | 1,57 | | 3,51 | | | 3,51 | | | 2,24 |
| 3.Gang | 2,24 | 1,43 | 2,24 | | | 1,87 | | | 1,00 | |
| 4.Gang | 1,57 | 1,31 | | 1,57 | | | 1,57 | | | 1,00 |
| 5. Gang | 1,20 | 1,20 | 1,20 | | | 1,00 | | | 0,53 | |
| 6.Gang | 1,00 | | | 1,00 | | | 1,00 | | | 0,64 |
| | | | | | i_s'= | 1,20 | 1,00 | i_s"= | 1,87 | 1,57 |

Um die ganz links dargestellte Übersetzungsreihe i mit 6 Gängen und Spreizung 6 zu erhalten, müssen die in den mit i_p1 und i_p2 überschriebenen Spalten dargestellten Übersetzungen auf die Teilgetriebe PG1 und PG2 aufgeteilt werden (der Stufensprung ist mit phi bezeichnet). Mit den zur Verfügung stehenden Stirnradübersetzungen kann nun jeweils eine dieser Übersetzungen als Direktgang (i=1,0) gewählt werden. In den mit i_p1' und i_p2' überschriebenen Spalten ist jeweils der letzte Gang als Direktgang gewählt, in den mit i_p1" und i_p2" überschriebenen Spalten wurde der mittlere Gang als Direktgang gewählt. Darunter sind die jeweils notwendigen Stirnradübersetzungen dargestellt. Es muss jedoch noch zusätzlich eine weitere nicht dargestellte Endübersetzung (Achsübersetzung) hinzugefügt werden, um die erforderlichen Gesamtübersetzungen zu erhalten. Anhand dieses Schemas lässt sich somit erkennen, dass auf einfache Weise Planetengetriebe ausgewählt werden können, welche die erforderlichen Übersetzungen darstellen können.

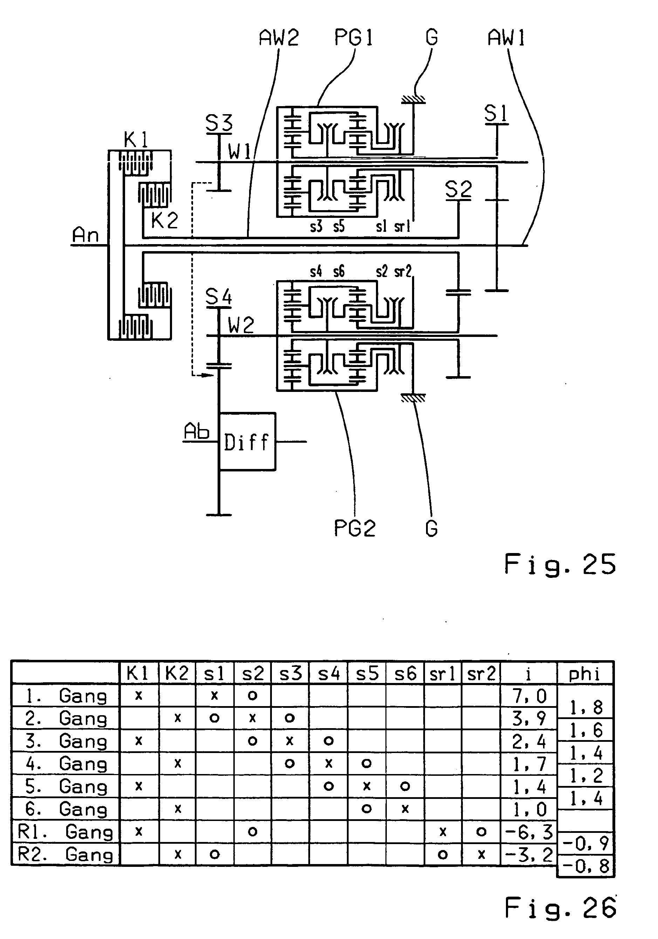

In Figur 25 ist eine detaillierte Ansicht eines die in Figur 23 gezeigte Anordnung aufweisenden Getriebes dargestellt, welches als Sechsganggetriebe mit zwei Rückwärtsgängen ausgebildet ist, wobei beide Teilplanetengetriebe PG1, PG2 gleich aufgebaut sind und sich nur in ihren Standübersetzungen unterscheiden. Beide Teilgetriebe beinhalten jeweils drei Vorwärts- und einen Rückwärtsgang; die Anpassung der Einzel-Übersetzungen an die erforderliche Gesamt-Übersetzung erfolgt über unterschiedliche Stirnradstufen S1, S2, S3, und S4.

In der Figur sind mit s1, s2, s3, s4, s5 und s6 die für den ersten, zweiten, dritten, vierten, fünften bzw. sechsten Gang zu betätigende formschlüssige Schaltelemente bezeichnet, die vorzugsweise als, Synchronisierungen ausgebildet sind. Des weiteren sind mit sr1 und sr2 die Schaltelemente bezeichnet, die für den ersten bzw. zweiten Rückwärtsgang erforderliche sind; mit G ist ein Gehäuse des Getriebes bezeichnet.

Das Planetengetriebe PG1 repräsentiert hierbei das Teilgetriebe 1 mit den ungeraden Gängen und das Planetengetriebe PG2 repräsentiert hierbei das Teilgetriebe 2 mit den geraden Gängen. Die Funktionsweise zum Schalten der unterschiedlichen Gänge unterscheidet sich nicht von der Funktionsweise von konventionellen Doppelkupplungsgetrieben. Die einzelnen Gänge werden in den Teilgetrieben vorbereitet und durch den Kupplungswechsel in der Doppelkupplung geschaltet.

In Figur 26 ist ein Schaltschema für das in Figur 25 gezeigte Getriebe dargestellte. Für jeden Gang wird eine Kupplung K1 bzw. K2 der Doppelkupplung sowie ein formschlüssiges Schaltelement eines Teilgetriebes PG1, PG2 geschlossen, dem die zu schließende Kupplung K1 bzw. K2 zugeordnet ist. In der Figur sind mit x die für den jeweiligen Gang benötigten Schaltelemente und mit o die für den nächst höheren oder nächst niedrigen Gang zu vorbereitenden Schaltelemente des anderen Teilgetriebes bezeichnet (bei den Rückwärtsgängen sind mit o auch die für den nächstmöglichen Vorwärtsgang erforderliche Schaltelemente bezeichnet). Dem Schaltschema können die jeweiligen Übersetzungen i der einzelnen Gangstufen und die daraus zu bestimmenden Stufensprünge phi beispielhaft entnommen werden.

Der erste Gang ergibt sich durch Schließen der Kupplung K1 und des Schaltelementes s1, der zweite Gang durch Schließen der Kupplung K2 und des Schaltelementes s2, der dritte Gang durch Schließen der Kupplung K1 und des Schaltelementes s3 und der vierte Gang durch Schließen der Kupplung K2 und des Schaltelementes s4. Ferner ergibt sich der fünfte Gang durch Schließen der Kupplung K1 und des Schaltelementes s5 und der sechste Gang durch Schließen der Kupplung K2 und des Schaltelementes s6. Wie aus dem Schaltschema ersichtlich, ergibt sich der erste Rückwärtsgang durch Schließen der Kupplung K1 und des Schaltelementes sr1, wobei sich der zweite Rückwärtsgang durch Schließen der Kupplung K2 und des Schaltelementes sr2 ergibt.

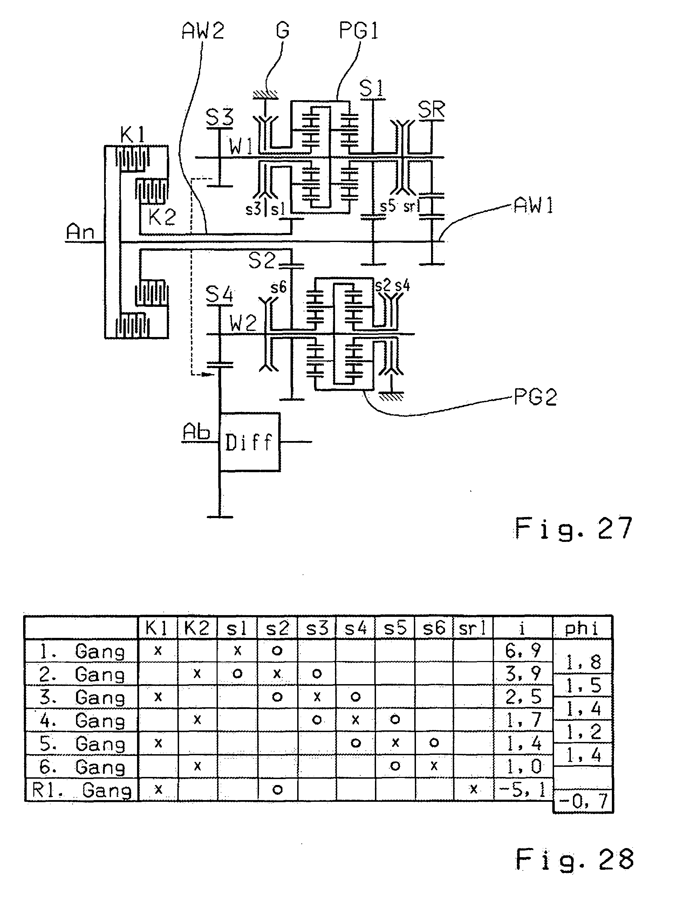

In Figur 27 ist ebenfalls ein Sechsganggetriebe gezeigt, bei dem die Stirnradstufen S1, S2 in Kraftflussrichtung vor den Planetengetrieben PG1, PG2 angeordnet sind, wobei die Planetengetriebe PG1, PG2 jeweils auf einer unterschiedlichen zur Antriebsachse parallelen Zwischenachse W1 bzw. W2 angeordnet sind, und wobei beide Teifplanetengetriebe PG1, PG2 gleich aufgebaut sind (ein Teilgetriebe ist jedoch gespiegelt angeordnet) und sich nur in ihren Standübersetzungen unterscheiden. Wie bei dem in Figur 25 gezeigten Getriebe ist nach den Planetengetrieben PG1, PG2 jeweils eine weitere Stirnradstufe S3 bzw. S4 angeordnet, welche die Wirkverbindung zur Abtriebswelle Ab herstellt. Beide Teilgetriebe PG1, PG2 beinhalten jeweils drei Vorwärtsgänge, wobei der notwendige Rückwärtsgang mittels einer Stirnradstufe SR und einer Synchronisierung sr1 realisierbar ist. Die Anpassung der Einzel-Übersetzungen an die erforderliche Gesamt-Übersetzung erfolgt gemäß der Erfindung über unterschiedliche Stirnradstufen S1, S2, S3 und S4.

In Figur 28 ist ein Schaltschema für das in Figur 27 gezeigte Getriebe dargestellt. Für jeden Gang wird eine Kupplung K1 bzw. K2 der Doppelkupplung sowie ein formschlüssiges Schaltelement eines Teilgetriebes PG1, PG2 geschlossen, dem die zu schließende Kupplung K1 bzw. K2 zugeordnet ist. In der Figur sind mit x die für den jeweiligen Gang benötigten Schaltelemente und mit o die für den nächst höheren oder nächst niedrigeren Gang zu vorbereitenden Schaltelemente des anderen Teilgetriebes bezeichnet (beim Rückwärtsgang ist mit o das für den zweiten Vorwärtsgang benötigte Schaltelement bezeichnet). Dem Schaltschema können die jeweiligen Übersetzungen i der einzelnen Gangstufen und die daraus zu bestimmenden Stufensprünge phi beispielhaft entnommen werden.

Der erste Gang ergibt sich durch Schließen der Kupplung K1 und des Schaltelementes s1, der zweite Gang durch Schließender Kupplung K2 and des Schaltelementes s2, der dritte Gang durch Schließen der Kupplung K1 und des Schaltelementes s3 und der vierte Gang durch Schließen der Kupplung K2 und des Schaltelementes s4. Ferner ergibt sich der fünfte Gang durch Schließen der Kupplung K1 und des Schaltelemente s5 und der sechste Gang durch Schließen der Kupplung K2 und des Schaltelementes s6. Wie aus dem Schaltschema ersichtlich, ergibt sich der Rückwärtsgang durch Schließen der Kupplung K1 und des Schaltelementes sr1.

Durch die erfindungsgemäße Konzeption wird eine sehr kompakte Baueinheit zur Verfügung gestellt; durch die kurze Baulänge sind die hier vorgestellten Getriebe optimal für eine Front-Quer Bauweise; Planetengetriebe zeichnen sich durch eine hohe spezifische Leistungsdichte im Vergleich zu Vorgelegegetrieben aus, wobei mit weniger Elementen mehr Übersetzungen darstellbar sind. Des weiteren ist ein erfindungsgemäßes Getriebe im Vergleich zu konventionelle Doppelkupplungsgetrieben in Vorgelegebauweise leichter.

Im Rahmen weiterer Ausführungsformen können Mehrfachkupplungsgetriebe mit mehr als zwei Teilgetrieben vorgesehen sein, bei denen die Teilgetriebe analog zu den beschriebenen Beispielen als Planetengetriebe ausgebildet sind.

Ein weiterer Vorteil besteht darin, dass die Übersetzungswahl im Vergleich zu herkömmlichen Planetengetrieben freier ist, so dass das Getriebe an die Erfordernisse angepasst werden kann. Durch die zusätzlichen Stirnradstufen steigt der Freiheitsgrad bei der Übersetzungswahl, wodurch eine gewünschte Übersetzungsreihe in vorteilhafter Weise sehr genau getroffen werden oder verändert werden kann,

Des weiteren ist ein erfindungsgemäßes Getriebe durch die hohe Teile-Wiederverwendung kostengünstig herstellbar und weist einen höheren Wirkungsgrad im Vergleich zu konventionellen Planetengetrieben auf, via Verlustarme Synchrornisierungen eingesetzt werden. Zudem können pro Teilgetriebe zwei Direktgänge vorgesehen sein (bei einem herkömmlichen Planetengetriebe ist ein Direktgang realisierbar).

### Bezugszeichen

- K1: Kupplung
- K2: Kupplung
- PG1: Planetengetriebe
- PG2: Planetengetriebe
- An: Antriebswelle
- Ab: Abtriebswelle
- AW1: Vollwelle
- AW2: Hohlwelle
- W1: Zwischenwelle
- W2: Zwischenwelle
- S1: Stirnradstufe
- S2: Stirnradstufe
- S3: Stirnradstufe
- S4: Stirnradstufe
- SR: Stirnradstufe
- Diff: Differenzial
- G: Gehäuse
- l: Übersetzung
- phi: Stufensprung
- s1: Schaltelement
- s2: Schaltelemente
- s3: Schaltelement
- s4: Schaltelement
- s5: Schaltelement
- s6: Schaltelement
- sr1: Schaltelement
- sr2: Schaltelement

## Patentansprüche

1. Doppelkupplungsgetriebe für eine Front-Quer-Anordnung, umfassend eine Doppelkupplung und zwei Teilgetriebe, wobei die beiden Kupplungen (K1, K2) der Doppelkupplung jeweils auf eine koaxiale Getriebeeingangswelle (AW1, AW2) wirken, die auf ein Teilgetrieben wirkt, **dadurch gekennzeichnet, dass** die Teilgetriebe als formschlüssig zu schaltende Planetengetriebe (PG11, PG2) ausgebildet sind, und dass der Abtrieb an der gleichen Seite des Getriebes wie der Antrieb und achsparallel zum Antrieb mit in den Vorwärtsgängen gleicher Drehrichtung erfolgt, wobei das Moment über zumindest eine parallel zu den Getriebeeingangswellen (AW1, AW2) angeordnete Zwischenwelle (W1, W2) auf die Abtriebswelle (Ab) übertragen wird.

2. Doppelkupplungsgetriebe für eine Front-Quer-Anordnung nach Anspruch 1, **dadurch gekennzeichnet, dass** die Planetengetriebe (PG1, PG2) aus mindestens einem Planetensatz in konventioneller Bauweise bestehen.

3. Doppelkupplungsgetriebe für eine Front-Quer-Anordnung nach Anspruch 2, **dadurch gekennzeichnet, dass** die Planetensätze als ebene Minus- oder Plus-Planetensätze oder als Stufenplanetensätze ausgebildet sind.

4. Doppelkupplungsgetriebe für eine Front-Quer-Anordnung nach Anspruch 1, 2 oder 3, **dadurch, gekennzeichnet , dass** die Planetengetriebe (PG1, PG2) mit Synchronisierungen oder mit Klauenkupplungen schaltbar sind.

5. Doppelkupplungsgetriebe für eine Front-Quer-Anordnung nach einem der vorangehenden Ansprüche, **dadurch gekennzeichnet, dass** die einzelnen Gänge in den Teilgetrieben (PG1, PG2) vorbereitet und durch den Kupplungswechsel in der Doppelkupplung geschaltet werden, wobei jedes Planetengetriebe (PG1, PG2) mindestens die Hälfte weniger einen der benötigten Vorwärtsgänge aufweist, wobei ein Planetengetriebe (PG1, PG2) entweder die geraden oder die ungeraden Gänge darstellt.

6. Doppelkupplungsgetriebe für eine Front-Quer-Anordnung nach einem der vorangehenden Ansprüche, **dadurch gekennzeichnet, dass** die Rückwärtsgänge durch Schließen eines Schaltelementes eines Planetengetriebes oder durch eine zusätzliche Stirnradstufe und ein formschlüssiges Schaltelement realisierbar sind.

7. Doppelkupplungsgetriebe für eine Front-Quer-Anordnung nach einem der vorangehenden Ansprüche, **dadurch gekennzeichnet, dass** die Teilgetriebe (PG1, PG2) gleich aufgebaut sind.

8. Doppelkupplungsgetriebe für eine Front-Quer-Anordnung nach einem der vorangehenden Ansprüche, **dadurch gekennzeichnet, dass** jedem Planetengetriebe (PG1, PG12) zumindest eine Stirnradstufe (S1, S2) zugeordnet ist, welche axial bzw. räumlich betrachtet links oder rechts vor dem jeweiligen Getriebe (PG1, PG2) angeordnet ist.

9. Doppelkupplungsgetriebe für eine Front-Quer-Anordnung nach Anspruch 8, **dadurch gekennzeichnet, dass** die Stirnradstufen (S1, S2) in Kraftflussrichtung nach den Planetengetrieben (PG1, PG2) angeordnet sind, wobei die Planetengetriebe (PG1, PG2) auf der Antriebswelle (AW1, AW2) angeordnet sind.

10. Doppelkupplungsgetriebe für eine Front-Quer-Anordnung nach Anspruch 8, **dadurch gekennzeichnet, dass** die Stirnradstufen (S1, S2) in Kraftflussrichtung vor den beiden Planetengetrieben (PG1, PG2) angeordnet sind, wobei die Planetengetriebe (PG1, PG2) entweder auf der gleichen zur Antriebsachse parallelen Zwischenwelle (W1) oder auf zwei unterschiedlichen parallelen Zwischenwellen (W1, W2) angeordnet sind.

11. Doppelkupplungsgetriebe für eine Front-Quer-Anordnung nach Anspruch 9, **dadurch gekennzeichnet, dass** zwei zusätzliche Stirnradstufen (S3, S4) vorgesehen sind, um die Verbindung der weiteren Zwischenwellen (W1, W2) zur Abtriebswelle (Ab) zu gewährleisten.

12. Doppelkupplungsgetriebe für eine Front-Quer-Anordnung nach Anspruch 10, **dadurch gekennzeichnet, dass** die Stirnradstufen (S3, S4) jeweils aus einem Antriebsritzel und einem Abtriebsrad bestehen.

13. Doppelkupplungsgetriebe für eine Front-Quer-Anordnung nach Anspruch 10, **dadurch gekennzeichnet, dass** für beide Stirnradstufen (S3, S4) ein einziges Abtriebsrad vorgesehen ist, auf das beide Antriebsritzel wirken, wobei die Stirnradstufen (S3, S4) als zwei getrennte Übersetzungen verwendbar sind.

14. Doppelkupplungsgetriebe für eine Front-Quer-Anordnung nach Anspruch 8, **dadurch gekennzeichnet, dass** eine Stirnradstufe (S1, S2) in Kraftflussrichtung vor dem ihr zugeordneten Planetengetriebe (PG1, PG2) und eine Stirnradstufe (S1,S2) in Kraftflussrichtung nach dem ihr zugeordneten Planetengetriebe (PG1, PG2) angeordnet ist, wobei das Planetengetriebe, dessen zugeordnete Stirnradstufen in Kraftflussrichtung vor demselben angeordnet ist, auf der Zwischenwelle (W1) parallel zur Antriebsachse angeordnet ist.

15. Doppelkupplungsgetriebe für eine Front-Quer-Anordnung nach Anspruch 8 oder 13, **dadurch gekennzeichnet, dass** im Fall einer einzigen Zwischenwelle (W1) eine zusätzliche Stirnradstufe (S3) vorgesehen ist, welche die Zwischenwelle (W1) mit der Abtriebswelle (Ab) verbindet.

16. Doppelkupplungsgetriebe für eine Front-Quer-Anordnung nach einem der vorangehenden Ansprüche, **dadurch gekennzeichnet, dass** die Doppelkupplung als ein Doppelkupplungsmodul oder als "aufgelöste" Doppelkupplung, umfassend zwei an unterschiedlichen Stellen im Getriebe angeordnete Kupplungen, ausgeführt ist.

17. Doppelkupplungsgetriebe für eine Front-Quer-Anordnung nach einem der vorangehenden Ansprüche, **dadurch gekennzeichnet, dass** der Leistungsfluss vom Motor über ein optionales Element zur Drehschwingungsreduktion, über einen hydraulischen Drehmomentwandler oder über eine hydraulische Kupplung in die Doppelkupplung erfolgt.

18. Doppelkupplungsgetriebe für eine Front-Quer-Anordnung nach einem der vorangehenden Ansprüche, **dadurch gekennzeichnet, dass** das Abtriebsrad bzw. die Abtriebsräder mit einem Ausgleichsdifferenzial (Diff) verbunden sind, das entweder für den Drehzahlausgleich zwischen rechtem und linken angetriebenen Rad (reiner Front-Antrieb) oder für den Drehzahlausgleich zwischen Vorder- und Hinterachse (Allradantrieb) sorgt.

## Claims

1. Dual-clutch transmission for a front-transverse arrangement, comprising a dual clutch and two partial transmissions, with the two clutches (K1, K2) of the dual clutch acting in each case on a coaxial transmission input shaft (AW1, AW2) which acts on a partial transmission, **characterized in that** the partial transmissions are designed as planetary gear sets (PG1, PG2) to be shifted in a positively locking manner, and **in that** the drive output takes place on the same side of the transmission as the drive input and axially parallel to the drive input in the same rotational direction in the forward gears, with the torque being transmitted to the drive output shaft (Ab) via at least one intermediate shaft (W1, W2) which is arranged parallel to the transmission input shafts (AW1, AW2).

2. Dual-clutch transmission for a front-transverse arrangement according to Claim 1, **characterized in that** the planetary gear sets (PG1, PG2) are composed of at least one planet set of conventional design.

3. Dual-clutch transmission for a front-transverse arrangement according to Claim 2, **characterized in that** the planet sets are designed as planar minus or plus planet sets or as stepped planet sets.

4. Dual-clutch transmission for a front-transverse arrangement according to Claim 1, 2 or 3, **characterized in that** the planetary gear sets (PG1, PG2) can be shifted using synchronizers or using claw clutches.

5. Dual-clutch transmission for a front-transverse arrangement according to one of the preceding claims, **characterized in that** the individual gears in the partial transmissions (PG1, PG2) are prepared and shifted by means of the clutch change in the dual clutch, with each planetary gear set (PG1, PG2) having at least half minus one of the required forward gears, with a planetary gear set (PG1, PG2) constituting either the even-numbered or odd-numbered gears.

6. Dual-clutch transmission for a front-transverse arrangement according to one of the preceding claims, **characterized in that** the reverse gears can be realized by closing a shift element of a planetary gear set or by means of an additional spur gear stage and a positively locking shift element.

7. Dual-clutch transmission for a front-transverse arrangement according to one of the preceding claims, **characterized in that** the partial transmissions (PG1, PG2) are of identical design.

8. Dual-clutch transmission for a front-transverse arrangement according to one of the preceding claims, **characterized in that** each planetary gear set (PG1, PG2) is assigned at least one spur gear stage (S1, S2) which, as viewed axially or spatially, is arranged to the left or right in front of the respective transmission (PG1, PG2).

9. Dual-clutch transmission for a front-transverse arrangement according to Claim 8, **characterized in that** the spur gear stages (S1, S2) are arranged downstream of the planetary gear sets (PG1, PG2) in the power flow direction, with the planetary gear sets (PG1, PG2) being arranged on the drive input shaft (AW1, AW2).

10. Dual-clutch transmission for a front-transverse arrangement according to Claim 8, **characterized in that** the spur gear stages (S1, S2) are arranged upstream of the two planetary gear sets (PG1, PG2) in the power flow direction, with the planetary gear sets (PG1, PG2) being arranged either on the same intermediate shaft (W1) which is parallel to the drive input axle or on two different parallel intermediate shafts (W1, W2).

11. Dual-clutch transmission for a front-transverse arrangement according to Claim 9, **characterized in that** two additional spur gear stages (S3, S4) are provided in order to ensure the connection of the further intermediate shafts (W1, W2) to the drive output shaft (Ab).

12. Dual-clutch transmission for a front-transverse arrangement according to Claim 10, **characterized in that** the spur gear stages (S3, S4) are composed in each case of a drive input pinion and a drive output wheel.

13. Dual-clutch transmission for a front-transverse arrangement according to Claim 10, **characterized in that** a single drive output wheel is provided for both spur gear stages (S3, S4), which drive output wheel is acted on by both drive input pinions, with it being possible for the spur gear stages (S3, S4) to be used as two separate transmission ratios.

14. Dual-clutch transmission for a front-transverse arrangement according to Claim 8, **characterized in that** one spur gear stage (S1, S2) is arranged upstream of the associated planetary gear set (PG1, PG2) in the power flow direction and one spur gear stage (S1, S2) is arranged downstream of the associated planetary gear set (PG1, PG2) in the power flow direction, with the planetary gear set whose associated spur gear stage is arranged upstream thereof in the power flow direction being arranged on the intermediate shaft (W1) parallel to the drive input axle.

15. Dual-clutch transmission for a front-transverse arrangement according to Claim 8 or 13, **characterized in that**, in the case of a single intermediate shaft (W1), an additional spur gear stage (S3) is provided which connects the intermediate shaft (W1) to the drive output shaft (Ab).

16. Dual-clutch transmission for a front-transverse arrangement according to one of the preceding claims, **characterized in that** the dual clutch is designed as a dual-clutch module or as a "separated" dual clutch comprising two clutches arranged at different points in the transmission.

17. Dual-clutch transmission for a front-transverse arrangement according to one of the preceding claims, **characterized in that** the power flow from the engine into the dual clutch takes place via an optional element for vibration reduction, via a hydraulic torque converter or via a hydraulic coupling.

18. Dual-clutch transmission for a front-transverse arrangement according to one of the preceding claims, **characterized in that** the drive output wheel or the drive output wheels are connected to a differential (Diff) which serves to generate rotational speed equalization between the right-hand and left-hand driven wheels (purely front-wheel drive) or rotational speed equalization between the front and rear axles (all-wheel drive).

## Revendications

1. Transmission à double embrayage pour un agencement transversal avant, comprenant un double embrayage et deux transmissions partielles, les deux embrayages (K1, K2) du double embrayage agissant à chaque fois sur un arbre d'entrée de boîte de vitesses coaxial (AW1, AW2), qui agit sur une transmission partielle, **caractérisée en ce que** les transmissions partielles sont réalisées sous forme de transmissions planétaires (PG1, PG2) à commuter par engagement par correspondance géométrique, et **en ce que** la sortie a lieu sur le même côté de la transmission que l'entraînement et avec un axe parallèle à l'entraînement avec un sens de rotation identique dans les vitesses de marche avant, le couple étant transmis à l'arbre de sortie (Ab) par le biais d'au moins un arbre intermédiaire (W1, W2) disposé parallèlement aux arbres d'entrée de boîte de vitesses (AW1, AW2).

2. Transmission à double embrayage pour un agencement transversal avant selon la revendication 1,
**caractérisée en ce que** les transmissions planétaires (PG1, PG2) se composent d'au moins un jeu planétaire de construction conventionnelle.

3. Transmission à double embrayage pour un agencement transversal avant selon la revendication 2,
**caractérisée en ce que** les jeux planétaires sont réalisés sous forme de jeux planétaires plans positifs ou négatifs ou sous forme de jeux planétaires étagés.

4. Transmission à double embrayage pour un agencement transversal avant selon la revendication 1, 2 ou 3, **caractérisée en ce que** les transmissions planétaires (PG1, PG2) peuvent être commutées avec des synchronisations ou avec des accouplements à griffes.

5. Transmission à double embrayage pour un agencement transversal avant selon l'une quelconque des revendications précédentes, **caractérisée en ce que** les vitesses individuelles sont préparées dans les transmissions partielles (PG1, PG2) et sont commutées par le changement d'embrayage dans le double embrayage, chaque transmission planétaire (PG1, PG2) présentant au moins la moitié d'au moins l'une des vitesses de marche avant requises, une transmission planétaire (PG1, PG2) constituant soit les vitesses paires, soit les vitesses impaires.

6. Transmission à double embrayage pour un agencement transversal avant selon l'une quelconque des revendications précédentes, **caractérisée en ce que** les vitesses de marche arrière peuvent être réalisées en fermant un élément de commutation d'une transmission planétaire ou par un étage de pignon droit supplémentaire et un élément de commutation par engagement par correspondance géométrique.

7. Transmission à double embrayage pour un agencement transversal avant selon l'une quelconque des revendications précédentes, **caractérisée en ce que** les transmissions partielles (PG1, PG2) sont construites de manière identique.

8. Transmission à double embrayage pour un agencement transversal avant selon l'une quelconque des revendications précédentes, **caractérisée en ce que** l'on associe à chaque transmission planétaire (PG1, PG2) au moins un étage de pignon droit (S1, S2) qui est disposé, vu axialement ou spatialement, à gauche ou à droite avant la transmission respective (PG1, PG2).

9. Transmission à double embrayage pour un agencement transversal avant selon la revendication 8,
**caractérisée en ce que** les étages de pignons droits (S1, S2) sont disposés, dans la direction du flux de forces, après les transmissions planétaires (PG1, PG2), les transmissions planétaires (PG1, PG2) étant disposées sur l'arbre d'entraînement (AW1, AW2).

10. Transmission à double embrayage pour un agencement transversal avant selon la revendication 8,
**caractérisée en ce que** les étages de pignons droits (S1, S2) sont disposés dans la direction du flux de forces avant les deux transmissions planétaires (PG1, PG2), les transmissions planétaires (PG1, PG2) étant disposées soit sur le même arbre intermédiaire (W1) parallèle à l'axe d'entraînement, soit sur deux arbres intermédiaires différents parallèles (W1, W2).

11. Transmission à double embrayage pour un agencement transversal avant selon la revendication 9,
**caractérisée en ce que** deux étages de pignons droits supplémentaires (S3, S4) sont prévus, afin de garantir la connexion des autres arbres intermédiaires (W1, W2) à l'arbre de sortie (Ab).

12. Transmission à double embrayage pour un agencement transversal avant selon la revendication 10,
**caractérisée en ce que** les étages de pignons droits (S3, S4) se composent à chaque fois d'un pignon d'entraînement et d'une roue de sortie.

13. Transmission à double embrayage pour un agencement transversal avant selon la revendication 10,
**caractérisée en ce que** pour les deux étages de pignons droits (S3, S4), on prévoit une roue de sortie unique, sur laquelle agissent les deux pignons d'entraînement, les étages de pignons droits (S3, S4) pouvant être utilisés comme deux multiplications séparées.

14. Transmission à double embrayage pour un agencement transversal avant selon la revendication 8,
**caractérisée en ce qu'**un étage de pignon droit (S1, S2) est disposé dans la direction du flux de forces avant la transmission planétaire (PG1, PG2) qui lui est associée, et un étage de pignon droit (S1, S2) est disposé dans la direction du flux de forces après la transmission planétaire (PG1, PG2) qui lui est associée, la transmission planétaire dont l'étage de pignon droit associé est disposé avant elle dans la direction du flux de forces étant disposée sur l'arbre intermédiaire (W1) parallèlement à l'axe d'entraînement.

15. Transmission à double embrayage pour un agencement transversal avant selon la revendication 8 ou 13,
**caractérisée en ce que** dans le cas d'un arbre intermédiaire (W1) unique, on prévoit un étage de pignon droit supplémentaire (S3) qui relie l'arbre intermédiaire (W1) à l'arbre de sortie (Ab).

16. Transmission à double embrayage pour un agencement transversal avant selon l'une quelconque des revendications précédentes, **caractérisée en ce que** le double embrayage est réalisé sous forme de module de double embrayage ou sous forme de double embrayage "déclenché", comprenant deux embrayages disposés à des endroits différents dans la transmission.

17. Transmission à double embrayage pour un agencement transversal avant selon l'une quelconque des revendications précédentes, **caractérisée en ce que** le flux de puissance du moteur s'effectue par le biais d'un élément optionnel pour la réduction des oscillations de rotation, par le biais d'un convertisseur de couple hydraulique ou par le biais d'un embrayage hydraulique dans le double embrayage.

18. Transmission à double embrayage pour un agencement transversal avant selon l'une quelconque des revendications précédentes, **caractérisée en ce que** la roue de sortie ou les roues de sortie sont connectées à un différentiel (Diff), qui assure l'équilibrage des vitesses de rotation entre les roues motrices droite et gauche (traction avant uniquement) ou l'équilibrage des vitesses de rotation entre les essieux avant et arrière (entraînement à quatre roues motrices).
